Europäisches Patentamt

European Patent Office

Office européen des brevets

(11) Numéro de publication: **0 113 056**
**B1**

(12) **FASCICULE DE BREVET EUROPEEN**

(45) Date de publication du fascicule du brevet: **28.01.87**

(21) Numéro de dépôt: **83111997.9**

(22) Date de dépôt: **30.11.83**

(51) Int. Cl.⁴: **A 21 D 13/08,** A 23 L 1/164,
A 23 L 1/18

(54) **Biscuit et son procédé de fabrication.**

(30) Priorité: **30.12.82 CH 7624/82**

(43) Date de publication de la demande:
**11.07.84 Bulletin 84/28**

(45) Mention de la délivrance du brevet:
**28.01.87 Bulletin 87/05**

(84) Etats contractants désignés:
**AT BE CH DE FR IT LI LU NL SE**

(56) Documents cités:
**FR-A-1 576 800**
**FR-A-2 124 734**
**FR-A-2 444 408**
**GB-A-1 234 462**
**GB-A-1 293 453**

Le dossier contient des informations
techniques présentées postérieurement au
dépôt de la demande et ne figurant pas dans le
présent fascicule.

(73) Titulaire: **SOCIETE DES PRODUITS NESTLE S.A.**
**Case postale 353**
**CH-1800 Vevey (CH)**

(72) Inventeur: **Persson, Tyko**
**Ch. des Sources 3**
**CH-1110 Morges (CH)**
Inventeur: **Duc, Héribert**
**Penchèvre 19**
**CH-1350 Orbe (CH)**
Inventeur: **Buhler, Marcel**
**La Musardière**
**CH-1111 Tolochenaz (CH)**

(56) References cited:
**W.H. SMITH "Biscuits, Crackers and Cookies",
1972, volume 1, "Technology, Production and
Management" (Applied Science Publ. Ltd.
Londres), pages 122-123**

Courier Press, Leamington Spa, England.

EP 0 113 056 B1

## Description

La présente invention a pour objet un biscuit et son procédé de fabrication.

La biscuiterie traditionelle travaille avec des pâtes à base de farine de blé obtenues en pétrissant la farine avec une certaine quantité d'eau jusqu'à obtention de la consistance recherchée. Du sucre et des matières grasses sont incorporés à ces pâtes pour en modifier la consistance et le comportement à la cuisson au four, notamment leur élasticité ou friabilité et leur aptitude à la levée. Cette technologie traditionnelle implique la néessité d'incorporer une quantité non négligeable d'eau dans la pâte, eau qui devra être ensuite complètement évaporée lors de la cuisson au four. Les étapes de fabrication sont longues et souvent compliquées. Les étapes précédant la cuisson au four exigent en particulier une maîtrise parfaite d'une matière enzymatiquement et microbiologiquement vivante.

On connaît par ailleurs une technique récente qui permet la fabrication d'amuse-gueules croustillants ou de céréales instantanées pour petit-déjeuner p. ex. à partir de mélanges de farine et d'ingrédients variés. Cette technique connue sous le nom de cuisson-extrusion allie les avantages de la simplicité, de la rapidité et de l'inocuité. Les mélanges en cause sont en effet très vite portés à des températures supérieures à 120°C où les enzymes sont rapidement inactivées et les micro-oganismes détruits.

FR—A—2 124 734 propose un procédé de fabrication d'un biscuit d'avoine dans lequel on utilise cette technique de cuisson-extrusion pour faire une base d'avoine cuite expansée, on subdivise la base en morceaux, on sèche les morceaux, on mélange les morceaux avec un sirop de sucre ou liant, on forme des biscuits par moulage et pressage de ce mélange et l'on sèche le biscuit moulé.

La présente invention a pour but de proposer un biscuit de ce type qui présente de qualités originales et remarquables quant à l'aspect, le goût, la croustillance, la résistance à l'hydratation et la conservabilité, ainsi qu'un procédé pour la fabrication d'un tel biscuit qui se distingue résolument de la technologie traditionnelle et qui permette de recourir à la technique de cuisson-extrusion.

A cet effet, le biscuit selon la présente invention, composé de granules d'une base cuite expansée enrobés d'un liant et agglomérés, est caractérisé par le fait qu'il présente un poids spécifique de 0,3—0,8 g/cm³ et une teneur en eau de 1,5—4,5% en poids, ladite base a été obtenue par cuisson-extrusion sous une pression de 80—120 bar à une température de 140—180°C et comprend, en parties en poids, 40—80 parties de farine de blé, 0—20 parties de saccharose et 0,5—3 parties d'huile ou grasse, ladite base présente un poids spécifique de 0,1—0,3 g/cm³, et ledit liant comprend, en parties en poids, 8—30 parties de saccharose et/ou d'un mélange de glucose et de ses polymères.

De même, le procédé de fabrication d'un biscuit selon la présente invention, dans lequel on obtient par cuisson-extrusion une base de céréale cuite expansée, on subdivise la base en morceaux, on mélange les morceaux avec un liant, on forme des biscuits par moulage et l'on sèche les biscuits moulés, est caractérisé par le fait que pour préparer la base on mélange, en parties en poids, 40—80 parties de farine de blé, 0—20 parties de saccharose, 0,5—3 parties d'huile ou graisse et 0—3 parties d'eau, on soumet ce mélange à une cuisson-extrusion sous une pression de 80—120 bar à une température de 140—180°C de sorte qu'on obtienne à la sortie d'une filière d'extrusion une base cuite expansée présentant un poids spécifique de 0,1—0,3 g/cm³, pour préparer un liant on mélange, en parties en poids, 8—30 parties de saccharose et/ou de sirop de glucose et 5—15 parties d'eau, on réduit la base en granules, on ajoute le liant aux granules tout en les brassant, on obtient une masse que l'on met en forme de biscuits par moulage sous pression et l'on sèchs les biscuits jusqu'à une teneur en eau de 1,5 à 4,5 % en poids.

Par farine de blé, élément principal de la base, on entend dans le présent exposé un produit de la mouture de grains de blé, mouture suffisamment fine pour que le mélange destiné à la préparation de la base puisse former une masse plastique lisse sous l'effet des efforts de compression et de cisaillement et de la température auxquelles il est soumis lors de la cuisson-extrusion.

Par sirop de glucose, un élément préféré du liant, on entend dans le présent exposé un mélange de glucose et de ses polymères obtenu par hydrolyse partielle de l'amidon, présentant une valeur de DE (équivalent de dextrose) de environ 30 à 50 et une teneur en eau de environ 15 à 25%. Cette eau et/ou les 5—15 parties d'eau ajoutées au liant pour lui donner une fluidité adéquate sont pratiquement les seules qu'il reste à éliminer durant le séchage du biscuit.

La quantité d'huile ou graisse indiquée joue un rôle de lubrifiant dans la préparation de la base, facilitant la formation d'une masse plastique lisse lors de la cuisson-extrusion. On peut utiliser à ce titre la plupart des huiles ou graisses comestibles du commerce. On peut aussi ajouter un peu d'huile ou graisse au liant ou à la masse de liant et de granules pour influencer leur viscosité p. ex., de préférence en quantité telle que la teneur en matière grasse du biscuit ne dépasse pas environ 5% en poids de matière sèche. On peut également ajouter à la masse de liant et de granules un peu de maltodextrine pour renforcer si nécessaire la résistance sous la dent du biscuit.

Les 0 à 3 parties d'eau indiquées ont pour effet d'amener la teneur en eau du mélange à extruder à une valeur proche de environ 18% qui est favorable pour expanser la base dans la mesure désirée lorsqu'elle sort de la buse d'extrusion. Dans le même ordre d'idée, on peut dire qu'une pression de 80—120 bars et une température de 140—180°C dans la base avant la filière d'extrusion et une durée totale de la cuisson-extrusion de quelques dizaines de secondes conviennent bien pour obtenir une base présentant le poids spécifique recherché.

En ce qui concerne le sacchrose, ou peut en ajouter ou non selon la composition recherchée du produit final. On peut l'ajouter au mélange à extruder et/ou au liant. Il n'est pas nécessaire d'utiliser du saccharose raffiné à l'extrême et l'on préfère même, étant donné le caractère naturel du présent biscuit, utiliser p. ex. du sucre de canne brut.

Afin de conférer au biscuit une belle couleur brune et d'équilibrer sa composition et son goût, on peut incorporer à la base, en parties en poids, 1—3 parties de poudre de lait écrémé p. ex. et 0,3—2 parties de chlorure de sodium. De même, ou peut incorporer au liant 5—10 parties en poids de miel.

Le présent biscuit peut être avantageusement présenté dans un format relativement massif, de préférence sous une forme plane de contour géométrique simple tel qu'un cercle, un carré ou une étoile p. ex. et d'épaisseur relativement importante. Il est destiné à être consommé tel quel, le consommateur pouvant le croquer à belle dent, ou trempé dans un liquide tel que le lait en guise de céréales pour petit-déjeuner p. ex. Le biscuit présente un aspect granuleux qui rappelle un amas de grains de céréales. Outre par son aspect, il se distingue des produits obtenus en biscuiterie traditionnelle par sa couleur et sa texture. Ainsi, il est possible d'obtenir un biscuit clair et léger avec du blé entier grâce à une mouture fine et à l'expansion de la base, alors qu'en biscuiterie traditionelle on obtiendrait un produit foncé et dense. De même, une adjonction de soja p. ex. à la composition de la base ne confère pas au biscuit la couleur grise que l'on pourrait craindre. Le présent biscuit est croustillant et conserve bien cette propriété parce qu'il présente un très faible hygroscopicité. De même, il conserve longtemps sa croustillance lorsqu'il est trempé dans un liquide. Il se conserve particulièrement bien.

L'intérêt du présent type de biscuit réside également dans le fait que l'on peut utiliser une farine de blé entière, à savoir une farine à trés haut taux d'extraction. C'est ainsi que dans une forme d'exécution préférée du présent biscuit ladite farine de blé est une farine de blé présentant un taux d'extraction de 80—98%. On peut même utiliser un blé complet avec son germe, malgré l'activité enzymatique très forte du germe. On peut aussi prévoir toutes sortes de mélanges présentant un intérêt nutritionnel particulier, notamment la combinaison de blé avec des légumineuses telles que le soja ou le pois p. ex. On peut ainsi ajouter une farine de légumineuse à la base à raison de 5 à 15 parties en poids p. ex. Ainsi, non seulement on ne craint pas les risques bactériens ou les réactions enzymatiques, mais encore on échappe à la nécessité de préparer une pâte capable de lever. Les oléagineuses se laissent en effet difficilement incorporer dans une pâte traditionnelle, car elles modifient sa viscosité et favorisent la formation de chemins préférentiels par lesquels le gaz carbonique produit par les levures s'échappe au lieu de rester piégé dans la pâte.

De même, la faible quantité d'eau à éliminer durant le séchage signifie que ce traitement thermique peut être relativement bref et modéré et qu'il ménage les substances aromatiques naturelles et les composants thermosensibles nutritivement importants tels que la lysine présents dans le biscuit. Ainsi, des substances précieuses sur le plan nutritionnel ou dégustatif peuvent-elles être ajoutées au liant ou à la masse de liant et de granules sans risque d'être notablement détruites lors du séchage.

De préférence, lesdits granules formant le biscuit présentent une dimension moyenne de 0,3 à 3 mm. Le choix précis de la granulation dépend d'une part de la dimension du biscuit lui-même et d'autre part des propriétés physiques des composants en cause, notamment la viscosité du liant et la porosité de la base. Si l'on veut obtenir la croustillance souhaitée, il faut que le liant enrobe bien les granules et les pénètre superficiellement sans pénétrer trop profondément à l'intérieur. Il faut trouver ainsi un équilibre délicat entre la dimension des granules, leur porosité et la viscosité du liant tout en respectant des conditions assez précises de durée et de température lorsqu'on ajoute le liant aux granules. On a obtenu p. ex. de bons résultats en préparant un liant à base de sirop de glucose présentant une viscosité dynamique de 100 à 300 mPas entre 20 et 30°C, en réduisant ladite base en granules présentant une dimension moyenne de 0,3 à 3 mm et en ajoutant le liant aux granules par aspersion tout en les brassant durant 2—5 min à 20—30°C. D'une manière générale, on choisit une dimension moyenne des granules relativement petite, p. ex. 0,3—1 mm, pour des biscuits relativement minces, p. ex. 5 mm d'épaisseur, et une dimension moyenne des granules relativement grande, p. ex. 1—3 mm, pour des biscuits relativement épais, p. ex. 10 mm d'épaisseur, de manière à obtenir une croustillance comparable pour des biscuits d'épaisseurs différentes.

Pour pouvoir facilement réduire en granules la base cuite expansée, on extrude de préférence la base à travers une filière à ouvertures multiples. Avec une filière percée de nombreux petits trous, on peut obtenir un faisceau de boudins expansés de faible diamètre que l'on peut directement réduire en granules de la dimension voulue avec un couteau rotatif rapide. Avec une filière percée d'un moins grand nombre d'ouvertures de plus grandes dimensions on peut obtenir des boudins de plus fort diamètre que l'on peut découper tout d'abord en tronçons réguliers avec un couteau rotatif puis broyer dans un moulin traditionnel tel qu'un moulin à marteau p. ex. Dans ce second cas, la dimension moyenne des granules peut être déterminée par tamisage à travers plusieurs tamis à mailles de grandeurs décroissantes p. ex. Dans le premier cas, la dimension moyenne peut être considérée ici comme la racine cubique du volume moyen des granules.

Pour mesurer la viscosité dynamique ou viscosité apparente du liant, on peut utiliser un viscosimètre rotatif du type à cylindres coaxiaux avec cylindre intérieur rotatif p. ex. Le liant est versé dans le dispositif à cylindres qui est lui-même tempéré dans un bain-marie. Les mesures sont faites pour une vitesse de rotation variánt en continu de 0 à 380 tours/min et la viscosité en est déduite par l'intermédiaire de tabelles.

Cette opération de l'addition du liant aux granules requiert donc une attention toute particulière. Elle peut être réalisée à l'aide de tout mélangeur industriel tel qu'un mélangeur à vis du type ressort hélicoïdal avec buse d'aspersion axiale ou avec une drageuse p. ex. Pour un liant à base de sirop de glucose, à savoir un liant comprenant au moins environ 3 parties de sirop de glucose pour 1 partie éventuelle de saccharose, on reste de préférence dans le bas ou le haut des domaines de durée et température mentionnés ci-dessus, à savoir 2—5 mins et 20—30°C, selon que les granules sont respectivement petits ou grands. On veille spécialement à ne pas prolonger l'opération trop longtemps et à ne pas abaisser inutilement la viscosité du liant, en le chauffant trop p. ex., de manière à ne pas trop imbiber les granules de liant ce qui donnerait après séchage un biscuit dur sous la dent.

Toutefois, il est également possible d'utiliser un liant comprenant exclusivement ou en majeure partie du saccharose. Dans ce cas, on ajoute le liant aux granules à chaud, à savoir à une température juste supérieure à la température de cristallisation, de manière à obtenir une bonne répartition du liant sur les granules puis une cristallisation rapide du saccharose. Avec cette variante, on peut obtenir un biscuit qui présente une résistance particulièrement forte au ramollissement lorsqu'il est plongé dans un liquide même chaud.

Pour parvenir à réaliser une imprégnation correcte des granules avec le liant, il est également important de respecter les limites énoncées plus haut quant au poids spécifique de la base extrudée. Si l'on sort de ces limites, on risque d'obtenir des porosités de la base trop grandes ou trop faibles qui ne conviennent pas, les granules devevant soit trop friables et absorbants, soit trop denses et imperméables.

La masse qui résulte de l'addition du liant aux granules est visqueuse et collante et sa manipulation demande un soin et des moyens mécaniques adéquats. En prenant les précautions requises pour que l'appareillage utilisé ne s'engorge pas d'une part et que la masse ne soit pas maltraitée d'autre part, on met donc cette masse en forme de biscuits par moulage sous pression. Par cette dernière expression, il faut comprendre que l'on exerce sur la masse un effet de compactage de manière qu'elle occupe un volume adéquat sans toutefois briser la structure même des granules. Ceux-ci doivent présenter une certaine solidité et l'on peut s'en assurer par des tests d'écrasement de la base sortant de la buse d'extrusion. On peut dire p. ex. que les granules ont une structure suffisamment solide si cinq tronçons de base de 7—15 mm de longueur sur environ 6 mm de diamètre juxtaposés dans un cylindre métallique à fond plat résistent à une force d'écrasement de 100 N exercée sur eux par un piston plat guidé par le cylindre. On attribue une valeur normée de 100 à une telle résistance.

Une fois démoulés, les biscuits sont séchés jusqu'à une teneur en eau de 1,5 à 4,5% en poids. Cette valeur est faible comparée aux 5—6% de la plupart des biscuits secs traditionnels et contribue également aux qualités de conservation particulièrement bonnes des présents biscuits. Le séchage peut s'opérer dans des fours traditionnels à air chaud p. ex., à des températures d'air de 150 à 180°C durant quelques min p. ex.

La croustillance de ces biscuits peut être contrôlée p. ex. en plaçant un biscuit sur un support à deux lames de 5 mm d'épaisseur distantes de 55 mm et en faisant descendre sur ce biscuit une lame de 3 mm d'épaisseur à une vitesse de 50 mm/min pour le briser en deux entre les deux lames. En mesurant la force et l'énergie necessaires pour briser le biscuit et en faisant le raport de l'énergie sur la force maximale on obtient un chiffre qui est un bon indice de croustillance. Un indice inférieur à 2 peut être considéré comme bon. Un chiffre trop grand indique un biscuit élastique et peu croustillant.

Les exemples ci-après sont présentés à titre d'illustration. Les pourcentages et parties y sont donnés en poids.

### Exemple 1

On mélange à sec 230 kg de farine complète de blé présentant un taux d'extraction de 90—92% et une teneur en eau de 14—15%, 41 kg de sucre de canne brun finement moulu présentant une teneur en saccharose de 97—98%, 1,7 kg de chlorure de sodium et 8,5 kg de poudre de lait écrémé présentant une teneur en matière sèche de 96%. On arrose le mélange tout en le brassant avec une émulsion de 6 kg d'huile d'arachide dans 9,5 kg d'eau.

On soumet le mélange à une cuisson-extrusion dans une extrudeuse à double vis où il est rapidement porté à une température supérieure à 120°C suite aux intenses efforts de frottement et de cisaillement sous pression élevée auxquels il est soumis. La température du mélange avant la filière d'extrusion et la pression exercée sur le mélange juste avant sa sortie par la filière sont respectivement de 163°C et 100 bar. Le temps de passage à travers l'extrudeuse est d'environ 30 s. Les boudins de base débouchant à pression atmosphérique par des ouvertures de 8 × 2 mm s'expansent sous l'effet de la vapeur qui s'échappe à travers la base brusquement décompressée. Ils sont découpés en tronçons d'environ 7 à 15 mm de longueur sur environ 6 mm de diamètre par des couteaux rotatifs. Les tronçons présentent un poids spécifique de 0,14 g/cm$^3$ et une résistance à l'écrasement de 107 déterminée comme précisé plus haut.

Les tronçons sont broyés à l'aide d'un moulin à marteaux muni d'une grille à ouvertures de 3,5 mm. On obtient des granules présentant une dimension moyenne de 1,2 mm, 83% étant retenus sur un tamis à mailles de 0,25 mm et 78,5% passant à travers un tamis à mailles de 2 mm.

On mélange 78 kg de sirop de glucose présentant un DE de 39 et une teneur en matière sèche de 83% (dont, sur matière sèche, 15% de glucose, 15% de maltose, 35% de tri-à heptasaccharides et 35% de polysaccharides supérieurs à hepta), 20,5 kg de sucre de canne brun, 30 kg de miel présentant une teneur en eau de 18% et 34,2 kg d'eau pour obtenir un liant présentant une teneur en matière sèche de 67,5% et une viscosité de 250 mPas à 20°C et 130 mPas à 30°C.

On ajoute le liant aux granules par charges de 4,34 kg de liant et 7,66 kg de granules dans des drageuses de 55 cm de diamètre et 60 cm de profondeur tournant à 19 tours/min. Le liant est ajouté aux granules par aspersion à l'aide d'une buse à deux fentes qui le projettent sous forme de deux faisceaux de fines gouttelettes largement ouverts, à raison de 1,44 kg de liant par min. L'opération de l'aspersion se déroule donc en 3 min, à une température de 20 à 25°C.

La masse obtenue est mise en forme de biscuits dans une machine présentant des loges ou moules cylindriques à fond plat. Des portions de masse telles que le biscuit final pèse 25 g à la sortie du four sont pressées dans ces loges par des pistons plats soumis à une force de 32 à 35 N. Une fois démoulés, les biscuits sont conduits dans un four à air chaud où ils sont soumis à des températures d'air de 160 à 170°C durant 4 à 5 min. On obtient des biscuits de 80 mm de diamètre et 13 mm d'épaisseur pesant 25 g qui présentent une teneur en eau de 4%, une belle couleur brun doré et une croustillance idéale. Leur indice de croustillance déterminé de la manière indiquée plus haut est légèrement inférieur à 2 alors que la force maximale pour les briser en deux est de 15 à 30 N. Leur qualité bactériologique est irréprochable. Ils se conservant parfaitement durant au moins 12 mois à 20°C et au moins 3 mois à 37°C enfermés dans des boîtes métalliques. Ils peuvent être consommés tels quels ou plongés dans une assiette de lait, à raison d'un biscuit pour 125 g de lait p ex. Leur croustillance se maintient durant plus de 5 min dans le lait à température ambiante.

### Exemple 2

On procède de la manière décrite à l'exemple 1, à l'exception du fait que l'on broye les tronçons de base cuite expansée à l'aide d'un moulin à marteaux muni d'une grille à ouvertures de 3 mm. On obtient des granules présentant une dimension moyenne de 0,65 mm, 73% étant retenus sur un tamis à mailles de 0,25 mm et 90% passant à travers un tamis à mailles de 2 mm.

De la manière décrite à l'exemple 1, on en confectionne des biscuits de 60 mm de diamètre et 8 mm d'épaisseur pesant 10 g et présentant une teneur en eau de 3%. Leur comportement sous la dent est très semblable à celui des biscuits de l'exemple 1 même si leurs dimensions sont plus modestes. Leur indice de croustillance est également légèrement inférieur à 2 alors que la force maximale pour les briser en deux est de 10 à 20 N.

### Exemple 3

On mélange à sec 194 kg de farine de blé présentant un taux d'extraction de 80%, 9,2 kg de sucre de canne brun, 37 kg de fèves de soja décortiquées finement moulues, 1,4 kg de chlorure de sodium et 7,4 kg de lait écrémé en poudre.

On asperge le mélange tout en le brassant avec une émulsion de 5,2 kg d'huile de soja dans 8,3 kg d'eau.

On soumet ce mélange à une cuisson extrusion dans des conditions proches de celles décrites à l'exemple 1. On obtient une base cuite expansée présentant un poids spécifique de 0,13 g/cm$^3$. On la réduit en granules présentant une dimension moyenne de 1,2 mm.

On mélange 19,5 kg de sucre de canne brun, 74 kg de sirop de glucose présentant un DE de 40, 28,7 kg de miel, 286 g d'extrait de vanille naturel en poudre et 32,6 kg d'eau.

De la manière et dans les conditions décrites à l'exemple 1, on ajoute le liant aux granules par aspersion, à raison de 61 parties de liant pour 100 parties de granules. On met la masse obtenue en forme de biscuits de 80 mm de diamètre et 13,5—14 mm d'épaisseur, on démoule, on sèche et l'on obtient des biscuits de environ 25 g présentant une teneur en eau de 3%.

Ces biscuits enrichis en protéines présentent une belle couleur brun clair doré qui n'est pas altérée par le soja. Ils sont savoureux et croustillants au même titre que les biscuits des exemples 1 et 2.

### Exemple 4

On mélange 55 kg de farine d'avoine, 217 kg de farine de blé présentant un taux d'extraction de 94%, 7,5 kg de chlorure de sodium, 7,5 kg de sucre de canne, 7 kg de poudre de lait écrémé, 7,8 kg d'huile d'arachide et 10 kg d'eau.

On soumet le mélange à une cuisson-extrusion sous une pression de 80 à 100 bars et une température de 165°C durant environ 20 s pour obtenir un faisceau de petits boudins de base expansée qui débouchent d'une filière faite d'une plaque d'acier percée de nombreux petits trous. Ces petits boudins sont découpés au ras de la filière par un couteau rotatif à 4 branches tournant à 5400 tours/min. On obtient ainsi directement des granules de 0,5 à 1 mm de diamètre sur 2 à 5 mm de long présentant un poids spécifique de 0,176 g/cm$^3$.

Pour obtenir le liant, on mélange 100, 5 kg de sucre de canne brun, 25,9 kg de miel, 145 g d'extrait de vanille naturel en poudre et 62,1 kg d'eau.

On asperge la base avec le liant chauffé à 60°C, à raison de 1,25 kg de liant pour 2 kg de granules chargés en continu par min, avec addition de 97 g/min de maltodextrine dans une drageuse semblable à celle décrite à l'exemple 1. La masse brassée en moyenne durant 2 min dans la drageuse est déversée en continu sur un moule du type grille à mailles carrées de 1,5 cm de côté et 1,5 cm de profondeur. La masse est régulièrement distribuée sur la grille et légrèrement comprimée dans les mailles par un dispositif adéquat. La grille est ensuite placée dans un four à air chaud où la masse est séchée en quelques minutes à une température d'air de environ 160°C. On démoule alors des biscuits cubiques de 1,5 cm d'arête qui présentent une teneur en eau de 3% et un poids de 2,5 g. Ces biscuits originaux à l'aspect céréalier appétissant et de couleur brun doré sont croquants et conservent cette propriété durant plusieurs minutes dans un liquide chaud, p. ex. du lait à 60—80°C.

## Revendications

1. Biscuit, composé de granules d'une base cuite expansée enrobés d'un liant et agglomérés, caractérisé par · le fait qu'il présente un poids spécifique de 0,3—0,8 g/cm³ et une teneur en eau de 1,5—4,5% en poids, ladite base a été obtenue par cuisson-extrusion sous une pression de 80—120 bar à une température de 140—180°C et comprend, en parties en poids, 40—80 parties de farine de blé, 0—20 parties de saccharose et 0,5—3 parties d'huile ou graisse, ladite base présente un poids spécifique de 0,1—0,3 g/cm³, et ledit liant comprend, en parties en poids, 8—30 parties de saccharose et/ou d'un mélange de glucose et de ses polymères.

2. Biscuit selon la revendication 1, caractérisé par le fait que ladite base comprend en outre, en parties en poids, 1—3 parties de poudre de lait écrémé et 0,3—2 parties de chlorure de sodium et ledit liant comprend en outre 5—10 parties en poids de miel.

3. Biscuit selon la revendication 1, caractérisé par le fait que ladite base comprend en outre 5—15 parties en poids de farine de légumineuse.

4. Biscuit selon la revendication 1, caractérisé par le fait que ladite farine de blé est une farine de blé présentant un taux d'extraction de 80—98%.

5. Biscuit selon la revendication 1, caractérisé par le fait que lesdits granules présentent une dimension moyenne de 0,3 à 3 mm.

6. Procédé de fabrication d'un biscuit, dans lequel on obtient par cuisson-extrusion une base de céréale cuite expansée, on subdivise la base en morceaux, on mélange les morceaux avec un liant, on forme des biscuits par moulage et l'on sèche les biscuits moulés, caractérisé par le fait que pour préparer la base on mélange, en parties en poids, 40—80 parties de farine de blé, 0—20 parties de saccharose, 0,5—3 parties d'huile ou graisse et 0—3 parties d'eau, on soumet ce mélange à une cuisson-extrusion sous une pression de 80—120 bar à une température de 140—180°C de sorte qu' on obtienne à la sortie d'une filière d'extrusion une base cuite expansée présentant un poids spécifique de 0,1—0,3 g/cm³, pour préparer un liant on mélange, en parties en poids, 8—30 parties de saccharose et/ou de sirop de glucose et 5—15 parties d'eau, on réduit la base en granules, on ajoute le liant aux granules tout en les brassant, on obtient une masse que l'on met en forme de biscuits par moulage sous pression et l'on sèche les biscuits jusqu'à une teneur en eau de 1,5 à 4,5% en poids.

7. Procédé selon la revendication 6, caractérisé par le fait que l'on incorpore à ladite base, en parties en poids, 1—3 parties de poudre de lait écrémé et 0,3—2 parties de chlorure de sodium et l'on incorpore audit liant 5—10 parties en poids de miel.

8. Procédé selon la revendication 6, caractérisé par le fait que l'on incorpore à ladite base 5—15 parties en poids de farine de légumineuse.

9. Procédé selon la revendication 6, caractérisé par le fait que ladite farine de céréale est une farine de blé présentant un taux d'extraction de 80—98%.

10. Procédé selon la revendication 6, caractérisé par le fait que l'on réduit ladite base en granules présentant une dimension moyenne de 0,3 à 3 mm.

11. Procédé selon la revendication 6, caractérisé par le fait que l'on prepare un liant à base de sirop de glucose présentant une viscosité dynamique de 100 à 300 mPas entre 20 et 30°C et l'on ajoute le liant aux granules par aspersion tout en les brassant durant 2—5 min à 20—30°C.

## Patentansprüche

1. Keks, bestehend aus Körnchen einer expandierten, gekochten Basis, die mit einem Bindemittel umhüllt und agglomeriert sind, dadurch gekennzeichnet, daß es ein spezifisches Gewicht von 0,3 bis 0,8 g/cm³ und einen Wassergehalt von 1,5 bis 4,5 Gew.—% aufweist, die genannte Basis durch Kochextrusion unter einem Druck von 80 bis 120 bar bei einer Temperatur von 120—180°C erhalten worden ist und 40 bis 80 Gewichtsteile Weizenmehl, 0—20 Gewichtsteile Saccharose und 0,5—3 Gewichtsteile Öl oder Fett enthält, die genannte Basis ein spezifisches Gewicht von 0,1 bis 0,3 g/cm³ aufweist und das genannte Bindemittel 8—30 Gewichtsteile Saccharose und/oder eines Gemisches von Glucose und ihren Polymeren enthält.

2. Keks nach Anspruch 1, dadurch gekennzeichnet, daß die genannte Basis zusätzlich 1 bis 3 Gewichtsteile Magermilchpulver und 0,3 bis 2 Gewichtsteile Natriumchlorid enthält und das genannte Bindemittel zusätzlich 5 bis 10 Gewichtsteile Honig enthält.

3. Keks nach Anspruch 1, dadurch gekennzeichnet, daß die genannte Basis zusätzlich 5 bis 15 Gewichtsteile Hülsenfrüchtemehl enthält.

4. Keks nach Anspruch 1, dadurch gekennzeichnet, daß das genannte Weizenmehl ein einen Extraktionsgrad von 80 bis 98% aufweisendes Weizenmehl ist.

5. Keks nach Anspruch 1, dadurch gekennzeichnet, daß die genannten Körnchen eine mittlere Abmessung von 0,3 bis 3 mm aufweisen.

6. Verfahren zur Herstellung eines Kekses, worin durch Kochextrusion eine gekochte, expandierte Getreidebasis erhalten wird, die Basis in Stücke zerteilt wird, die Stücke mit einem Bindemittel vermischt werden, durch Verformen Kekse gebildet werden und die geformten Kekse getrocknet werden, dadurch gekennzeichnet, daß man zur Bereitung der Basis 40 bis 80 Gewichtsteile Weizenmehl, 0 bis 20 Gewichtsteile Saccharose, 0,5 bis 3 Gewichtsteile Öl der Fett und 0 bis 3 Gewichtsteile Wasser vermischt, dieses Gemisch einer Kochextrusion unter einem Druck von 80 bis 120 bar bei einer Temperatur von 140 bis 180°C derart unterwirft, daß man am Austritt einer Extrusionsdüse eine expandierte, gekochte Basis erhält, die ein spezifisches Gewicht von 0,1 bis 0,3 g/cm³ aufweist, daß man zur Bereitung eines Bindemittels 8 bis 30 Gewichtsteile Saccharose und/oder Glucosesirup und 5 bis 15 Gewichtsteile Wasser vermischt, die Basis zu Körnchen zerkleinert, das Bindemittel den Körnchen unter Rühren derselben zusetst, eine Masse erhält, die man durch Verformung unter Druck in Keksform bringt und die Kekse bis auf einen Wassergehalt von 1,5 bis 4,5 Gew.-% trocknet.

7. Verfahren nach Anspruch 6, dadurch gekennzeichnet, daß man in die genannte Basis 1 bis 3 Gewichtsteile Magermilchpulver und 0,3 bis 2 Gewichtsteile Natriumchlorid einerbeitet und daß man dem genannten Bindemittel 5 bis 10 Gewichtsteile Honig zusetzt.

8. Verfahren nach Anspruch 6, dadurch gekennzeichnet, daß man in die genannte Basis 5 bis 15 Gewichtsteile Hülsenfrüchtemehl einarbeitet.

9. Verfahren nach Anspruch 6, dadurch gekennzeichnet, daß das genannte Getreidemehl ein einen Extraktionsgrad von 80 bis 98% aufweisendes Weizenmehl ist.

10. Verfahren nach Anspruch 6, dadurch gekennzeichnet, daß man die genannte Basis zu Körnchen mit einer mittleren Abmessung von 0,3 bis 3 mm zerkleinert.

11. Verfahren nach Anspruch 6, dadurch gekennzeichnet, daß man ein Bindemittel auf der Basis von Glucosesirup bereitet, der eine dynamische Viskosität von 100 bis 300 mPas zwischen 20 und 30°C aufweist, und daß man das Bindemittel den Körnchen durch Aufspritzen unter Rühren derselben während 2 bis 5 min bei 20 bis 30°C zusetzt.

**Claims**

1. A biscuit, consisting of granules of an expanded cooked base, which are coated with a binder and agglomerated, characterised in that it has a density of from 0.3 to 0.8 g/cm³ and a water content of from 1.5 to 4.5% by weight, said base was obtained by extrusion cooking under a pressure of 80—120 bar at a temperature of 140—180°C and consists of from 40 to 80 parts by weight of wheat flour, from 0 to 20 parts by weight of sucrose and from 0.5 to 3 parts by weight of oil or fat, said base has a density of from 0.1 to 0.3 g/cm³ and said binder consists of from 8 to 30 parts by weight of sucrose and/or a mixture of glucose and its polymers.

2. A biscuit according to claim 1, characterised in that said base contains in addition from 1 to 3 parts by weight of skimmed milk powder and from 0.3 to 2 parts by weight of sodium chloride and said binder contains in addition from 5 to 10 parts by weight of honey.

3. A biscuit according to claim 1, characterised in that said base contains in addition from 5 to 15 parts by weight of legume flour.

4. A biscuit according to claim 1, characterised in that said wheat flour is a wheat flour having an extraction rate of from 80 to 98%.

5. A biscuit according to claim 1, characterised in that said granules have an average size of from 0.3 to 3 mm.

6. A process for the manufacture of a biscuit, comprising the steps of obtaining an expanded cooked cereal base by extrusion cooking, splitting up the base into pieces, mixing the pieces with a binder, shaping the biscuits by moulding and drying the moulded biscuits, characterized in that the base is prepared by mixing together from 40 to 80 parts by weight of wheat flour, from 0 to 20 parts by weight of sucrose, from 0.5 to 3 parts by weight of oil or fat and from 0 to 3 parts by weight of water, this mixture is extrusion cooked under a pressure of 80—120 bar at a temperature of 140—180°C so that an expanded cooked base having a density of from 0.1 to 0.3 g/cm³ is obtained at the exit of an extrusion nozzle, a binder is prepared by mixing from 8 to 30 parts by weight of sucrose and/or glucose syrup and from 5 to 15 parts by weight of water, the base is reduced to granules, the binder is added to the granules while they are stirred, a mass is produced which is shaped into biscuits by moulding under pressure and the biscuits are dried until they have a water content of from 1.5 to 4.5% by weight.

7. A process according to claim 6, characterised in that from 1 to 3 parts by weight of skimmed milk powder and from 0.3 to 2 parts by weight of sodium chloride are added to the base and from 5 to 10 parts by weight of honey are added to the binder.

8. A process according to claim 6, characterised in that from 5 to 15 parts by weight of legume flour are added to the base.

9. A process according to claim 6, characterised in that the wheat flour is a wheat flour having an extraction rate of from 80 to 98%.

10. A process according to claim 6, characterised in that the base is reduced to granules having an average size of from 0.3 to 3 mm.

11. A process according to claim 6, characterised in that a binder, base on a glucose syrup, and which has a dynamic viscosity of from 100 to 300 mPas at between 20 and 30°C is prepared and the binder is added to the granules by spraying while they are stirred for 2 to 5 min at from 20 to 30°C.